# EUROPEAN PATENT APPLICATION

(11) **EP 1 372 299 A1**
(43) Date of publication of application: **17.12.2003**
(21) Application number: 02254137.9
(22) Date of filing: 13.06.2002
(51) Int. Cl.: H04L 12/56

(54) **A system for improving wireless communications devices**

(71) Applicant: Red-M (Communications) Limited, Wooburn Green, Buckinghamshire HP10 0HH (GB)
(72) Inventor: Franks, Roland Alexander, Hazlemere, Bucks HP15 7QX (GB)
(74) Representative: Finnie, Peter John

(57) **Abstract**

The present invention uses a wireless device (2) without audio capabilities as an intermediary between a wireless headset (1) and an audio gateway (3). The wireless device (2) supports a software application which allows the transfer of voice data to and from the headset (1) using a first protocol and transfer of voice data to and from the audio gateway (3) using a second protocol. It is also possible to use the same protocol for each connection, allowing the wireless device to act as a relay. The system is preferably a Bluetooth communications system.

## Description

### Field of the Invention

The present invention relates to communication between wireless devices, in particular Bluetooth devices.

### Background to the Invention

Wireless types of devices and networks are becoming more widespread. Wireless communication can be broken down into one of three main categories, radio, cellular and local. Radio communications are used for mainly long distance work, and cellular communications are used for mobile phones and the like.

In addition to this, local communication standards are also provided for short-range radio communication. One such short-range radio communication radio system is Bluetooth which can be used to provide customer premises wireless links for voice, data and multi-media applications.

A Bluetooth Radio Frequency (RF) system is a Fast Frequency Hopping Spread Spectrum (FFHSS) system in which packets are transmitted in regular time slots on frequencies defined by a pseudo random sequence. A Frequency Hopping system provides Bluetooth with resilience against interference. Interference may come from a variety of sources including microwave ovens and other communication systems operating in this unlicensed radio band which can be used freely around the world. The system uses 1MHz frequency hopping steps to switch among 79 frequencies in the 2.4GHz Industrial, Scientific and Medical (ISM) band at 1600 hops per second with each channel using a different hopping sequence.

The Bluetooth baseband architecture includes a Radio Frequency transceiver (RF), a Link Controller (LC) and a Link Manager (LM) implementing the Link Manager Protocol (LMP).

Bluetooth version 1.1 supports asymmetric data rates of up to 721 Kbits per second and 57.6Kbits per second and symmetric data rates of up to 432.5Kbits per second. Data transfers may be over synchronous connections, Bluetooth supports up to three pairs of symmetric synchronous voice channels of 64Kbits per second each.

Bluetooth connections operate in something called a piconet in which several nodes accessing the same channel via a common hopping sequence are connected in a point to multi-point network. The central node of a piconet is called a master that has up to seven active slaves connected to it in a star topology. The bandwidth available within a single piconet is limited by the master, which schedules time to communicate with its various slaves. In addition to the active slaves, devices can be connected to the master in a low power state known as park mode, these parked slaves cannot be active on the channel but remain synchronised to the master and addressable. Having some devices connected in park mode allows more than seven slaves be attached to a master concurrently. The parked slaves access the channel by becoming active slaves, this is regulated by the master.

Multiple piconets with overlapping coverage may co-operate to form a scatternet in which some devices participate in more than one piconet on a time division multiplex basis. These and any other piconets are not time or frequency synchronised, each piconet maintains its own independent master clock and hopping sequence.

The Bluetooth specification has therefore been designed for the primary purpose of allowing electronic devices to wirelessly communicate with each other in a local environment. The system is typically utilized in an environment in which one-to-one communication is achieved between two Bluetooth enabled devices.

Almost any electronic device can be Bluetooth enabled. Common electronic devices such as mobile telephones, PDAs, laptops, PCs and printers are increasingly being manufactured so as to be Bluetooth enabled. It is also possible to adapt existing devices to be Bluetooth enabled.

Bluetooth enabled devices can have different levels of Bluetooth functionality. Bluetooth headsets and pagers are typical of Bluetooth devices with limited functionality and in particular limited control functionality. Bluetooth headsets receive audio data from an telephony gateway device, such as a mobile telephone, and allow a user to listen and talk without holding the telephone to their ear. Audio data is transmitted in a Bluetooth system using a synchronous connectionless oriented (SCO) link. Bluetooth headsets necessarily have a limited range owing to restrictions on what is considered to be a desirable size and weight for a headset. Furthermore, headsets are typically only interoperable with devices using a particular protocol, such as RFCOMM, and only with one device at a time.

A PDA is an example of a device which can have greater Bluetooth functionality, including a greater level of control functionality. A Bluetooth enabled PDA typically has a higher power Bluetooth radio than a device like a headset. A PDA may be able to form multiple Bluetooth connections simultaneously, be able to use a number of different protocols, may include a memory and may be able to support security features, such as the use of Personal Identification Number (PIN) codes.

### Summary of the Invention

According to a first aspect of the present invention, a wireless communications system comprises:
an first wireless device;
a mobile intermediate wireless communications device; and,
a second wireless device,
wherein the mobile intermediate wireless communications device is adapted to communicate data with the first wireless device over a wireless channel using a first protocol and to communicate audio data with the second wireless device over a wireless channel using a second protocol.

The present invention allows the combination of a first wireless device, such as a headset, with another wireless device, such as a Personal Digital Assistant (PDA) or a laptop computer, to enhance the functionality of both devices. In this example, the combination of an audio headset with a non-audio PDA can provide the functionality of a mobile telephone. Typically, the first device has limited functionality and in particular limited control functionality. The intermediate device has different functionality to the first device and may advantageously have greater functionality than the first device. This greater functionality may include a higher power radio, greater sensitivity to incoming radio signals, the ability to form multiple connections simultaneously, a better user interface and enhanced security features.

Preferably, the first device and the intermediate device are Bluetooth enabled and communicate with each other using a Bluetooth connection. Preferably, the first device is an audio device and the second device is a telephony gateway. Preferably, the telephony gateway is Bluetooth enabled and communicates with the intermediate device using a Bluetooth connection. The telephony gateway may be a cordless telephony protocol telephony gateway such that the combination of the audio device and the intermediate device acts like a Bluetooth telephone. Preferably, the first wireless device is a headset. Preferably, the intermediate device is a PDA or a laptop computer.

According to a second aspect of the present invention, a mobile intermediate wireless communications device comprises:
a storage medium encoding computer executable instructions that support a first wireless communications protocol and a second wireless communications protocol and allow conversion between the first wireless communications protocol and the second wireless communications protocol;
at least one transceiver for sending and receiving data over a first communications channel using the first protocol and for sending and receiving data over a second communications channel using the second protocol.

Preferably, the mobile intermediate wireless communications device further includes means to establish a communications link with a remote transceiver. Preferably, the transceiver is a Bluetooth radio transceiver. Preferably, the data is audio data. The mobile intermediate wireless communications device may be a laptop computer or a PDA.

According to a third aspect of the present invention, a method of transferring audio data between a first wireless communications device and a second wireless communications device by providing a mobile intermediate wireless communications device comprises the steps of:
receiving data at the intermediate device using a first wireless communications protocol;
converting the data so that it is suitable for transmission using a second wireless communications protocol; and,
transmitting the audio data from the intermediate device using the second wireless communications protocol.

Preferably, the method further comprises the step of establishing a link between the intermediate device and the second communications device. Preferably, the data is audio data. Preferably, the wireless communications protocols are Bluetooth communications protocols.

According to a fourth aspect of the present invention, a computer program product comprises computer program code means adapted to perform the method according to the third aspect of the present invention. The computer program product may be software embodied on a computer readable medium.

According to a fifth aspect of the present invention, a mobile intermediate wireless communications device is adapted to relay data between a first wireless communications device and a second wireless communications device, wherein the intermediate device receives data in the form of a first signal from the first device and outputs the data as a second signal which can be received by the remote communications device.

In this aspect the intermediate device acts purely as a relay without performing data processing. The intermediate communications device provides a mobile relay for a first communications device having a relatively short range. Preferably, the first device is also a mobile device.

Preferably, the intermediate device is adapted to receive signals from a remote source and relay them to the first communications device. Preferably, the transmit power of the second signal is greater than the received power of the first signal. More preferably, the transmit power of the second signal is greater than the transmit power of the first signal. Preferably, the receive signal strength sensitivity of the intermediate device is greater than the receive signal strength sensitivity of the first mobile communications device.

The intermediate device may have another function as its primary function, for example it may be a PDA, a laptop or a mobile telephone equipped with a radio transceiver.

The intermediate device preferably includes a Bluetooth radio. The intermediate device is preferably adapted for use with a headset as the first mobile radio communications device, and more preferably a Bluetooth headset.

The intermediate device may provide greater connectivity than the first mobile radio communications device and may support security features.

The invention accordingly allows an "off the shelf" radio device having a short range to be used in situations in which it would not previously have functioned. The intermediate device of the present invention relays and preferably amplifies signals from the short range device and relays signals to the short range device from remote radio transceivers.

### Brief Description of the Drawings

Examples of the present invention will now be described in detail with reference to the accompanying drawings, in which:
Figure 1 is a schematic representation of a conventional Bluetooth implemented headset and telephony gateway communications set-up;
Figure 2 is a schematic representation of a headset and telephony gateway communications set-up according to one aspect of the present invention; and,
Figure 3 is a schematic representation of a PDA acting as a relay for a Bluetooth headset in accordance with another aspect of the present invention.

### Detailed Description

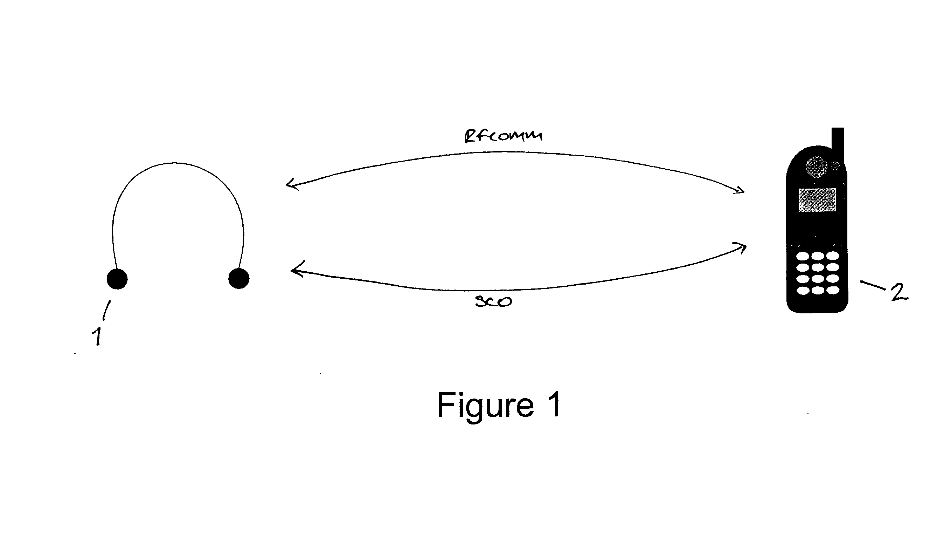

Figure 1 shows a headset 1 having a Bluetooth radio which is in radio communication with a Bluetooth enabled mobile telephone 2. The Bluetooth radio (not shown) on the headset is a low power, light weight radio which accordingly has a limited range. The distance that a typical Bluetooth headset can be from a telephony gateway before audio quality degrades to an unusable level is only a few metres. The headset allows a hands free operation of the telephone without the encumbrance of wires. The telephone can be kept in a user's pocket or bag and be operated from the headset. However, as stated above, the radio on the headset has a limited range and the quality of the audio signal deteriorates rapidly with distance from the telephone, especially if there are other objects positioned between the headset and the telephone.

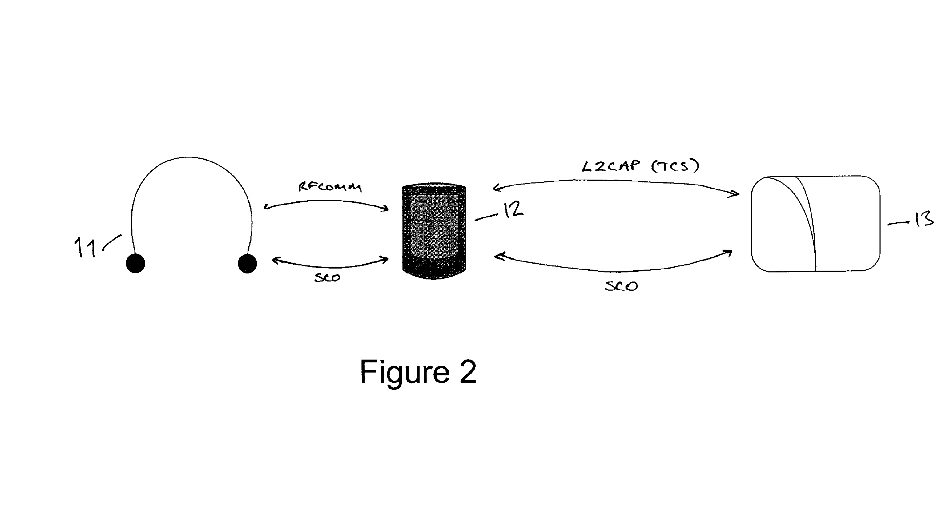

Figure 2 shows a Bluetooth communications system comprising a headset 11, a PDA 12 and a telephony gateway 13. Typically PDAs do not have any intrinsic audio capabilities. Notwithstanding this, in the present invention the PDA 12 is provided with a software application that allows the PDA to support a headset profile and a cordless telephony profile. The software application running on the PDA provides telephone like functions such as dialling and answering incoming calls. The application communicates with the telephony gateway 13 using the telephony control protocol specification (TCS).

In the control plane, an L2CAP session exists between the PDA 12 and the gateway 13, which is always initiated by the PDA 12. The PDA may be master or slave depending on whether role reversal is supported.

Correspondingly, an RFCOMM session exists between the PDA 12 and the headset 11. The RFCOMM session may be initiated by either device. The RFCOMM session is transient i.e. it is only in existence during a call.

In the present invention, there is no Bluetooth connection between the headset and the telephony gateway 13. The PDA 12 may be part of a piconet or a scatternet depending on the dynamics of the call. It is also possible a Bluetooth connection between a headset and a telephony gateway can be controlled by a third Bluetooth device, such as a PDA which is also connected to the telephony gateway. However, in such systems the third Bluetooth device is not connected to the headset and so is not an intermediate device. The complexity of such systems makes them undesirable.

When an audio path is required SCO links are established in the data plane between the gateway 13 and the PDA 12, and the PDA 12 and the associated headset 11. The PDA 12 switches voice data between the SCO channel to the gateway 13 and the SCO channel to the headset 11.

In operation the PDA 12 acts as a telephone even though it has no inherent audio capability. The headset 11 is controllable from the PDA 12 to allow incoming and outgoing calls.

The example described with reference to Figure 2 has a PDA 12 as the intermediate device. However, any Bluetooth device capable of running the software application could be used, although it is preferable to have a Graphical User Interface (GUI).

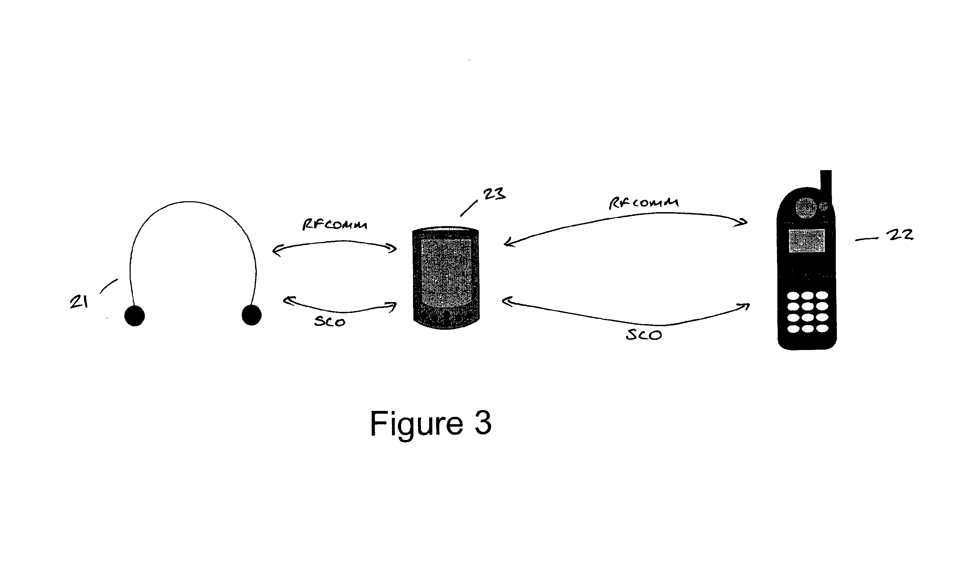

Figure 3 shows another aspect of the present invention. A headset 21 in radio communication with a mobile telephone 22 or other network access point (not shown) via an intermediate mobile radio communications device 23 according to the present invention. In this example, the intermediate device is a PDA 23 which is Bluetooth enabled. The Bluetooth radio fitted to the PDA 23 typically has a higher power, and hence greater range than the radio on the headset 21. The PDA acts as a relay between the headset 21 and the mobile telephone 22. The PDA 23 receives a relatively weak signal from the headset 21 and transmits a repeat of this with a higher signal strength than the original. Accordingly, the higher power radio on the PDA 23 allows the telephone 12 to be further away from the PDA 23 than from the headset 21 alone. The PDA 23 can easily be fitted with a higher power Bluetooth radio since there is less restriction on the size and weight of the radio used in the PDA than in the headset. The headset 21 could be any other low power radio device.

An example of the system of Figure 3 in operation will now be described. A call is initiated by the telephone 22 and an RFCOMM session is established with the PDA 23 acting as a slave. The PDA 23, acting as a master, then establishes an RFCOMM session with the headset 21 and relays commands between the mobile telephone 22 and the headset 21. When the telephone 22 establishes a SCO link with the PDA 23, the PDA establishes a SCO link with the headset 21 and switches data between them.

The PDA 23 appears to the telephone 22 as a headset and to the headset 21 as a mobile telephone. There are RFCOMM sessions, and underlying ACL channels, between the telephone 22 and the PDA 23, and between the PDA 23 and the headset 21.

Pairing and link key exchange occurs between the PDA 23 and the telephone 22 and between the headset 21 and the PDA 23. The combination of Bluetooth connections results in the PDA 23 being part of a scatternet. Alternatively , the PDA 23 may be a master of a piconet. The PDA 23 and telephone 22 can undergo a role change such that the PDA 23 becomes master and the telephone becomes a slave.

Other mobile devices are possible as the intermediate device since almost any electronic device can be Bluetooth enabled. For example a laptop computer or a mobile telephone could be used.

Similarly, the remote radio device can be something other than a mobile telephone, for example, it could be a Bluetooth network Access Point, such as the Red-M Access Point, available from Red-M (Communications) Limited, UK. The user of a headset could then communicate over the network so long as the intermediate mobile device remained in range of an Access Point and the headset and intermediate device remain in range of each other. This allows a user of a headset to roam throughout an area of network coverage and continue to communicate over the network via the headset. Handoff between Access Points can be achieved using known techniques. The range of access points in a Bluetooth network area is typically greater than the range of Bluetooth headsets. The invention allows existing headsets to be used in a manner compatible with areas covered by Bluetooth networks, such as airport lounges and offices.

The intermediate device, in this example a PDA, whilst acting as a relay, may also provide greater connectivity than the headset. The PDA may be connected to multiple remote devices simultaneously as master of a piconet or as part of a scatternet. The PDA may also support security features, such as the use of a PIN number, which is not supported by the headset alone.

## Claims

1. A wireless communications system comprising:
an first wireless communications device;
an mobile intermediate wireless communications device; and,
a second communications device,
wherein the mobile intermediate wireless communications device is adapted to communicate audio data with the first device over a wireless channel using a first protocol and to communicate data with the second device over a wireless channel using a second protocol.

2. A system according to claim 1, wherein the first device and the intermediate device are Bluetooth enabled and communicate with each other using a Bluetooth connection.

3. A system according to claim 1 or 2, wherein the second device is Bluetooth enabled and communicates with the intermediate device using a Bluetooth connection.

4. A system according to claim 1, 2 or 3, wherein the first device is an audio device and the second device is a telephony gateway.

5. A system according to claim 4, wherein the telephony gateway is a cordless telephony protocol telephony gateway, such that the combination of the audio device and the intermediate device acts like a Bluetooth telephone.

6. A system according to any preceding claim wherein the first device is a headset.

7. A system according to any preceding claim wherein the intermediate device is a Personal Digital Assistant (PDA) or a laptop.

8. A mobile intermediate wireless communications device suitable for use in the system of any preceding claim.

9. A mobile intermediate wireless communications device comprising:
a storage medium encoding computer executable instructions that support a first wireless communications protocol and a second wireless communications protocol and allow conversion between the first wireless communications protocol and the second wireless communications protocol;
at least one transceiver for sending and receiving data using the first protocol and for sending and receiving data using the second protocol.

10. A mobile intermediate wireless communications device according to claim 9, further including means to establish a communications link with a remote transceiver.

11. A mobile intermediate wireless communications device according to claim 9 or 10, wherein the transceiver is a Bluetooth radio transceiver.

12. A mobile intermediate wireless communications device according to claim 9, 10 or 11, wherein the data is audio data.

13. A mobile intermediate wireless communications device according to any one of claims 9 to 12, wherein the mobile intermediate wireless communications device is a laptop computer or a PDA.

14. A method of transferring audio data between a first wireless communications device and a second wireless communications device by providing a mobile intermediate wireless communications device comprising the steps of:
receiving data at the intermediate device using a first communications protocol;
converting the data so that it is suitable for transmission using a second communications protocol; and
transmitting the data from the intermediate device using the second communications protocol.

15. A method of transferring data according to claim 14, further comprising the step of establishing a link between the intermediate device and the second communications device.

16. A method of transferring data according to claim 14 or 15, wherein the data is audio data.

17. A method of transferring data according to claim 14, 15 or 16, wherein the communications protocols are Bluetooth protocols.

18. A computer program product comprising computer program code means adapted to perform the method of any one of claims 14 to 17.

19. A computer program product according to claim 18, comprising software embodied on a computer readable medium.

20. A mobile intermediate wireless communications device adapted to relay data between a firstwireless communications device and a remote communications device, wherein the intermediate device receives data in the form of a first signal from the first communications device and outputs the data as a second signal which can be received by the remote communications device.

21. A mobile intermediate device according to claim 20, wherein the intermediate device is adapted to receive signals from the remote communications device and relay them to the first mobile communications device.

22. A mobile intermediate device according to claim 20 or 21, wherein the transmit power of the second signal is greater than the received power of the first signal.

23. A mobile intermediate device according to any one of claims 20 to 22, wherein the transmit power of the second signal is greater than the transmit power of the first signal.

24. A mobile intermediate device according to any one of claims 20 to 23, wherein the receive signal strength sensitivity of the intermediate device is greater than the receive signal strength sensitivity of the first mobile communications device.

25. A mobile intermediate device according to any one of claims 20 to 24, having a function other than relaying data as its primary function.

26. A mobile intermediate device according to claim 25, wherein the mobile intermediate device is a PDA equipped with a radio transceiver.

27. A mobile intermediate device according to any one of claims 20 to 26, wherein the intermediate device is adapted for use with a headset as the first mobile communications device.

28. A mobile intermediate device according to any one of claims 20 to 28, including a Bluetooth radio.
